# EUROPEAN PATENT APPLICATION

(11) **EP 4 033 390 A1**
(43) Date of publication of application: **27.07.2022**
(21) Application number: 21152453.3
(22) Date of filing: 20.01.2021
(51) Int. Cl.: G06F 30/20

(54) **SYSTEM AND METHOD FOR FAULT PREDICTION AND MANAGEMENT OF AN ASSET**

(71) Applicant: Siemens Aktiengesellschaft, 80333 München (DE)
(72) Inventor: B R, Chethan Ravi, 577134 Chickmagalur District, Karnataka (IN); NAIR, P.V. Sudev, 560078 Bangalore, Karnataka (IN); RAJ, Arun, 635110 Hosur, Tamil Nadu (IN)
(74) Representative: Horn Kleimann Waitzhofer Patentanwälte PartG mbB

(57) **Abstract**

The present disclosure relates to a system (100) and method for management of an asset (105). The method comprises receiving, by a processing unit (305), condition data associated with components of asset (105), determining critical components which are likely to affect performance of asset (105) based on condition data, obtaining parameter values associated with critical components from distributed database (115) having asset simulation data associated with lifecycle phases of the asset (105), configuring an instantaneous digital twin of asset (105) based on parameter values of critical components obtained from distributed database (115), wherein instantaneous digital twin corresponds to particular variant of asset, simulating behavior of critical components based on configured instantaneous digital twin in simulation environment, predicting failure instance of critical components based on behavior of critical components in simulation environment, and diagnosing a cause of failure instance of one or more components based on prediction of the failure instance.

## Description

The present disclosure relates to management of an asset and more particularly relates to a system and a method for detecting a cause of failure of the asset using digital thread connecting different lifecycle phases of the asset.

Electro-mechanical systems during operation experience failure due to fatigue or creep or fracture caused by either external impact or internal structural weakness. The failure leads to damage of surface integrity, geometry, or internal structure. If the failure is not detected at an early stage the electro-mechanical systems may lead to system shutdown and unscheduled maintenance.

For this purpose, prediction of failures is performed at operation phase of the asset for early detection of anomalies and/or failures using simulation models. In spite of various techniques to strictly monitor and control the process parameters to ensure safe operation of an asset throughout its lifecycle, there will be failures recorded. These could be because of the wrong material selection, minor deviations in the manufacturing process parameters, defects in brought out parts, error or deviation in assembly process, overloading of component or assembly during operation, operating at non safe conditions etc. However, such factors pertaining to different lifecycle phases of the asset are not taken into consideration, thereby leading to inaccurate failure predictions. Conventionally, the input data for simulation models is obtained from sensors during the operation phase. In reality, all the stages of the lifecycle are interconnected and problems in the system or process could arise from any part of the lifecycle. However, product specific data from different lifecycle phases is not taken into consideration, which leads to inaccurate prediction of failures of the asset.

Moreover, root cause analysis of the predicted failures is effort intensive and a time-consuming process owning to the complex multi-physical interactions between system components. Interactions could be physical interaction between parts or components or through control systems or software. At present, there are simulation models available to understand the response of the system virtually for different operating conditions. These models work independently and the wholistic approach to take into consideration inputs from different phases of the lifecycle is not present.

Furthermore, transfer of data from various lifecycle phases such as design phase, manufacturing phase, assembly phase, and testing phase to operational phase is a challenge as these are from respective phases. Also, often handling of different lifecycle phases of the asset may belong to different vendors and manufactures. Therefore, another challenge is authenticity of the data obtained from these lifecycle phases. Henceforth, accurate prediction of life expectancy in operational phase is limited as there is no exchange of meaningful data among various lifecycle phases of the asset. Furthermore, another problem with conventional simulation models is that an average simulation model is designed which ignores specific variabilities of products which leads to inaccurate detection of failures, inaccurate detection of the cause of failures and life prediction.

In light of the above, there is a need for a mechanism for accurate detection of a cause of failure of the asset using digital thread connecting different lifecycle phases of the asset, in a secure and immutable manner.

Therefore, it is an object of the present invention to provide a system and a method for accurate fault prediction and management of an asset. The term 'asset' as used herein, may refer to any device, system, instrument or machinery manufactured or used in an industry that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on.

Further, the asset may be associated with a local memory unit such as a Programmable Read-Only-Memory (PROM), a microcontroller and so on. The local memory unit stores a unique identifier associated with the asset or one or more components of the asset. In one example, the unique identifier may be for example, a numeric string or an alphanumeric string that uniquely identifies the asset. The unique identifier may be assigned to the asset or the one or more components by an Original Equipment Manufacturer. In another example, the unique identifier may be assigned by another entity, for example, an end-user of the asset. In one embodiment, the local memory unit may be mechanically coupled to the asset. In another embodiment, the local memory unit may be associated with another system, for example, a workstation, a personal computer, a personal digital assistant (PDA) and so on.

The object of the present invention is achieved by a computer-implemented method for fault prediction and management of an asset. The method comprises receiving condition data associated with one or more components of the asset from one or more sources. Herein, the condition data is indicative of one or more operating conditions of the asset in real-time. The condition data is received from the one or more sources. The term 'sources' as used herein, refer to electronic devices configured to obtain and transmit the operational data to the processing unit. Non-limiting examples of sources include sensing units, controllers and edge devices. The sensing units measure operating parameters associated with the asset. For example, the sensing units may include thermal imaging devices, vibration sensors, current and voltage sensors, etc.

The term "operation parameter" refers to one or more characteristics of the asset. Accordingly, the condition data is a measure of the operating parameters associated with the operation of the asset. For example, the condition data includes values of vibration, temperature, current, magnetic flux, velocity, power of a rotor in a turbine and the like.

The method comprises determining one or more critical components which are likely to affect a performance of the asset based on the condition data. The term 'performance' as used herein refers to metrics that affect a productivity of the asset. In the present disclosure, the performance may be measured in terms, for example, cycle time, stability or accuracy of the asset. The term 'critical components' refers to one or more components of the asset that have a higher probability of failure than others. In an example, the critical components may be determined based on a history of failures, repair complexity of the component, impact on performance of other components and/or the asset in case of failure, cost of repair in case of failure and so forth. In other example, the critical components may be determined based on results of simulation models. The one or more critical components are selected such that behavior of these components affect a performance of the asset. In an embodiment, the one or more critical components may include rotors, windings, bearings, couplers, motors, shafts and so forth.

The method comprises obtaining parameter values associated with the one or more critical components from a distributed database. Herein, the distributed database stores asset simulation data associated with lifecycle phases of the asset. The distributed database may be a decentralized, distributed digital ledger that is used to record transactions across a plurality of nodes connected over a network, such that the recorded transactions are immutable and may be viewed by any of the nodes. In a preferred embodiment, the distributed database is implemented as a permissioned blockchain, where one or more nodes in the distributed database may be given express authority for validating transactions in the permissioned blockchain. In another embodiment, the distributed database may be implemented as a public blockchain or a combination of a public blockchain and a permissioned blockchain.

The term 'lifecycle phases' refers to phases or stages that a particular asset goes through until deployed for operation in real time. The different lifecycle phases of an asset may include design phase, manufacturing phase, assembly phases and testing phase. The asset in the different lifecycle phases may be handled/governed by different vendors. The term 'parameter values' refers to data and/or values that are considered for processes involved in the lifecycle phases. Such parameter values are crucial for accurate determination of failures in the asset at the operation stage. Non-limiting examples of parameter values include design tolerance, material information, operating temperature values for various processes, clearance value, fitness value, tolerance distribution, material property distribution, heat treatment process distribution, surface finish distribution, testing deviations and distributions, cycle time, test values, and so forth. Advantageously, the parameter values from the different lifecycle phases of the asset generated from different vendors are securely updated in the distributed database. The functionalities of the distributed database (herein, the blockchain) ensure immutability, security, non-repudiation, accessibility and authenticity of data received from various vendors.

In an embodiment, the asset simulation data is the data obtained from digital twin models generated for each of the lifecycle phases of the asset. In an embodiment, the method of generating the asset simulation data comprises generating a first digital twin associated with a first phase of the product lifecycle, wherein the first digital twin comprises a plurality of simulation models pertaining to each variant of the one or more components in the first phase. The method comprises generating a second digital twin associated with a second phase of the product lifecycle, wherein the second digital twin comprises a plurality of simulation models pertaining to each variant of the one or more components in the second phase. The method comprises simulating the first digital twin and second digital twin based on inputs from one or more sensors in the first phase and the second phase respectively. The method comprises generating asset simulation data based on the simulation.

In an embodiment, the method further comprises associating data pertaining to each of the variant of the asset with a unique identifier throughout the first phase and the second phase.

In an embodiment, the method of obtaining parameter values associated with the one or more critical components from the distributed database comprises identifying a unique identifier associated with the one or more critical components of the predicted failure instance based on the distributed database. The method comprises tracing the lifecycle phases of the one or more critical components based on the identified unique identifier. Further, the method comprises determining the parameter values from the distributed database pertaining to the one or more critical components based on the tracing.

In an embodiment, tracing the lifecycle phases of the critical components comprises identifying, by the processing unit, one or more transactions corresponding to the critical component from the distributed database based on the identified unique identifier associated with the component. Further, the method comprises obtaining the parameter values associated with the component from the identified transaction.

The method comprises configuring an instantaneous digital twin of the asset based on the parameter values obtained from the distributed database. Herein, the instantaneous digital twin corresponds to a particular variant of the asset.

The method comprises simulating a behavior of the one or more critical components based on the configured instantaneous digital twins in a simulation environment. The method comprises predicting a failure instance of the one or more critical components based on the behavior of the critical components in the simulation environment. The method comprises diagnosing a cause of the failure instance of the one or more components based on the prediction of the failure instance.

In an embodiment, the method of diagnosing the cause of the failure instance of the one or more components comprises simulating the predicted failure instance in a simulation environment. The method comprises determining the cause of the failure instance based on the simulation.

In an embodiment, the method of diagnosing the cause of the failure instance of each of the one or more components comprises comparing the parameter values obtained from the distributed database with historical data stored in a pre-learned knowledge base. Herein, the historical data comprises response trends of the component and associated cause for the response trends. The method comprises determining the cause of the failure instance of each of the one or more components from the historical data based on the comparison.

In an embodiment, the method further comprises comparing the determined cause of failure with an actual cause of failure upon failure of the asset. The method comprises updating the pre-learned knowledge base based on the comparison.

In an embodiment, the method further comprises determining a condition of the asset based on the identified cause of the failure of the critical components.

In an embodiment, the method further comprises generating, by the processing unit, one or more recommendations for maintenance of the asset based on the condition of the component.

In an embodiment, the method further comprises outputting, by the processing unit, the identified cause of the failure of the asset and the recommendations for maintenance of the asset on a Graphical User Interface associated with an output device.

The object of the present invention is achieved by a node comprising one or more processing units and a memory unit communicatively coupled to the one or more processing units and a memory unit communicatively coupled to the one or more processing units. The memory unit comprises one or more transactions associated with management of the asset and one or more modules stored in the form of machine-readable instructions executable by the one or more processing units. The one or more modules are configured to perform method steps according to the method as described above. The execution of the one or more modules may also be performed using co-processors such as Graphical Processing Unit (GPU), Field Programmable Gate Array (FPGA) or Neural Processing/Compute Engines. In addition, the memory unit may also include a database.

Additionally, the object of the present invention is achieved by a system comprising a network and a plurality of nodes as described above, communicatively coupled over the network. The plurality of nodes are configured as a distributed database for facilitating management of an asset according to the method as described above.

The term "distributed database" or "distributed database system" in context of the invention may refer to, for example, a blockchain, a distributed ledger, a distributed memory system, a distributed ledger technology (DLT) based system (DLTS), a revision secure/protected database (system), a cloud, a cloud-service, a blockchain as a cloud service or a peer-to-peer database. Additionally or alternatively a "distributed database" or "distributed database system" can, for example, be implemented by means of a directed acyclic graph (DAG) or a hash graph (e.g., Hedera). Additionally or alternatively a "distributed database" or "distributed database system" can, for example, be distributed database where at least a part of the components/elements of the distributed database is implemented by means of a cloud infrastructure. For example, nodes/devices of a distributed database system can be implemented as virtual devices on a cloud (service) (e.g., a virtual node/device). In a preferred embodiment, the distributed database is a blockchain. The blockchain may be one of a permissioned blockchain, a public blockchain or a combination thereof. The term "record" in context of the invention may refer to, for example, a block of a blockchain, a data-block of a peer to peer database or a data structure for storing one or more transactions.

The object of the present invention is also achieved by a computer-program product having machine-readable instructions stored therein, which when executed by one or more processing units, cause the processing units to perform a method as described above.

The object of the present invention is also achieved by a computer readable medium on which program code sections of a computer program are saved, the program code sections being loadable into and/or executable in a system to make the system execute the method as described above, when the program code sections are executed in the system as described above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
The present invention is further described hereinafter with reference to illustrated embodiments shown in the accompanying drawings, in which:
- FIG 1: illustrates a blockchain-based system for fault prediction and management of an asset, in accordance with one embodiment of the present invention;
- FIG 2: illustrates a simulation model set-up for generating asset simulation data is illustrated, in accordance with an embodiment of the present disclosure;
- FIG 3: illustrates an apparatus of the system of FIG 1 for fault prediction and management of an asset, in accordance with an embodiment of the present disclosure.;
- FIG 4: illustrates a flowchart depicting steps of a method for fault prediction and management of the asset, in accordance with one embodiment of the present invention;
- FIG 5: illustrates a flowchart depicting steps of a method for obtaining parameter values associated with the one or more critical components from the distributed database, in accordance with an embodiment of the present invention;
- FIG 6: illustrates a flowchart depicting steps of a method for generating asset simulation data, in accordance with an embodiment of the present invention; and
- FIG 7: illustrates a flowchart depicting steps of a method for diagnosing the cause of the failure instance of each of the one or more components, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

Disclosed embodiments provide systems and methods for management of an asset.

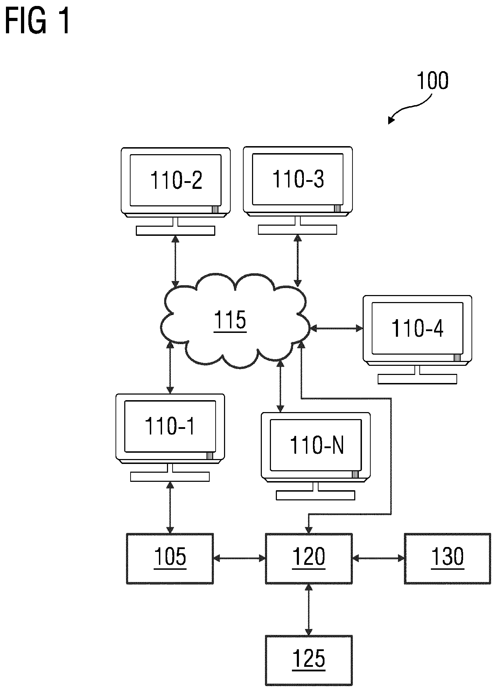

Referring to FIG 1, a blockchain-based system 100 for fault prediction and management of an asset 105 is described, in accordance with one embodiment of the present invention. The system 100 comprises a plurality of nodes 110-1, 110-2, 110-3, 110-4, 110-5, ... 110-N, hereinafter collectively referred as the plurality of nodes 110, communicatively coupled to each other over a network 115. In the present embodiment, the distributed database is implemented as a blockchain comprising the nodes 110-1, 110-2, 110-3, 110-4, 110-5, ... 110-N. Each of the nodes 110 may be a (personal) computer, a smartphone, a personal digital assistant a workstation, a virtual machine running on host hardware, a microcontroller, or an integrated circuit. As an alternative, each of the nodes 110 may be a real or a virtual group of computers (the technical term for a real group of computers is "cluster", the technical term for a virtual group of computers is "cloud"). It must be understood that the system 100 may comprise any number of nodes and each of the nodes 110-1, 110-2... 110-N may be associated with an entity that may be involved in development of the asset 105, throughout the lifecycle phases of the asset 105. In an exemplary embodiment, the node 110-1 may be associated with a first vendor for designing the asset, the node 110-2 may be associated with a second vendor for manufacturing the asset, the node 110-3 may be associated with a third vendor for assembling the asset, the node 110-4 may be associated with a fourth vendor for testing the asset and so on. In a preferred embodiment, each of the nodes 110-1, 110-2... 110-N store digital twin models of the asset in different lifecycle phases. The data generated from the respective digital twin models is the asset simulation data, which is stored on the blockchain network. Hereinafter, the blockchain network that enables data communication amongst various lifecycle phases of the asset, may sometimes be referred to as a 'digital thread'.

The nodes may comprise a memory to store a record of all the transactions happening across the blockchain. It must be understood that each of the nodes 110-1, 110-2...110-N store the same copy of the transactions. Consequently, if any of the nodes 110-1, 110-2...110-N attempt to modify existing records on the blockchain or to write a new record into the blockchain, each of the nodes 110-1, 110-2...110-N may validate such transactions through a consensus protocol. In the present embodiment, the blockchain may be based on a public blockchain where any node among the plurality of nodes 110-1, 110-2...110-N may read transactions recorded on the blockchain and may also participate in validation of new transactions through the consensus protocol. The consensus protocol enables the nodes 110-1, 110-2...110-N to agree on a transaction before being recorded on the blockchain. Each of the nodes 110-1, 110-2...110-N may be one of a member node or a validator node. The member nodes may initiate or receive transactions on the blockchain-based system 100, whereas the validator nodes may also validate transactions on the blockchain-based system 100 in addition to initiating or receiving transactions.

Further, the system 100 comprises an apparatus 120 for fault prediction and management of an asset 105. The apparatus 120 is configured to receive, by a processing unit, condition data associated with one or more components of the asset 105 from one or more sources, wherein the condition data is indicative of one or more operating conditions of the asset in real-time. The apparatus 120 is configured to determine one or more critical components which are likely to affect a performance of the asset 105 based on the condition data. The apparatus 120 is configured to obtain parameter values associated with the one or more critical components from a distributed database 115, wherein the distributed database 115 stores asset simulation data associated with lifecycle phases of the asset 105. The apparatus 120 is configured to configure an instantaneous digital twin for the asset 105 based on the parameter values obtained from the distributed database 115, wherein the instantaneous digital twin corresponds to a particular variant of the asset. The apparatus 120 is configured to simulate a behavior of the one or more critical components based on the configured instantaneous digital twins in a simulation environment. The apparatus 120 is configured to predict a failure instance of the one or more critical components based on the behavior of the critical components in the simulation environment. The apparatus 120 is configured to diagnose a cause of the failure instance of the one or more components based on the prediction of the failure instance.

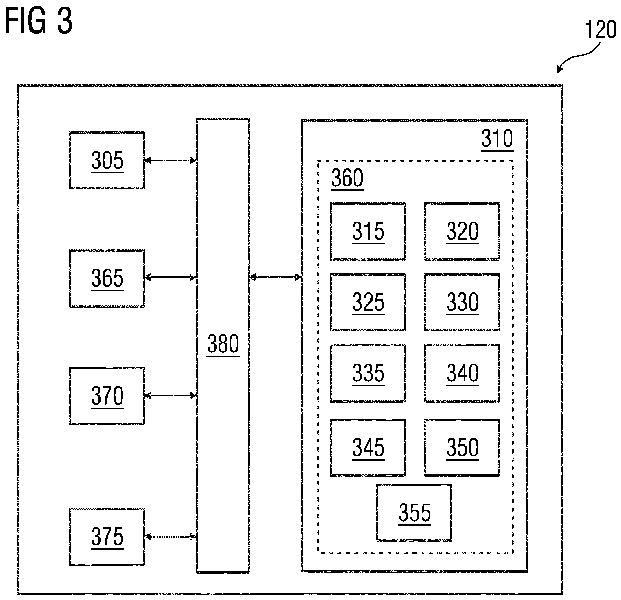

The apparatus 120 comprises a processing unit to perform the aforementioned steps. The apparatus is described in greater detail in FIG 3.

Further, the system 100 comprises a pre-learned knowledge base 130 communicatively coupled to the apparatus 120. The pre-learned knowledge base 130 comprises a plurality of pre-linked data objects indicative of parameters and corresponding responses pertaining to the one or more components of the asset, history of failures of the asset, historical data pertaining to parameter values of the one or more components of the asset, failure predictions and corresponding cause of failures and so forth. The apparatus 120 is configured to diagnose the root cause of the failure based on the historical data in the pre-learned knowledge base 130. Further, the system 100 comprises an output device 125 having a Graphical user interface (GUI) for outputting the root cause of the failure, simulation results, one or more recommendations and so forth.

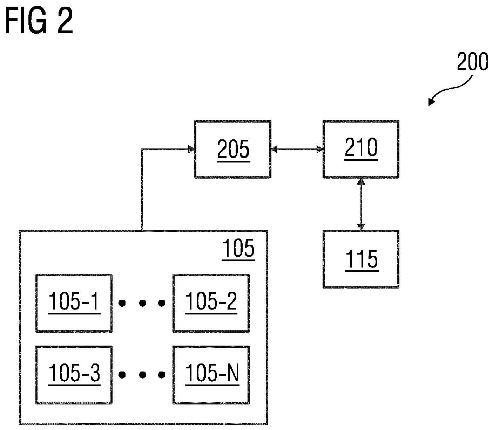

Referring to FIG 2, a simulation model set-up 200 for generating asset simulation data is illustrated, in accordance with an embodiment of the present disclosure. The asset 105 may be any device operating in the technical installation. Example of assets 105 include any machinery in a technical system or technical installation/facility such as motor, gear, bearing, shaft, switchgear, rotor, circuit breaker, protection devices, remote terminal units, transformers, reactors, disconnectors, gear-drive, gradient coils, magnet, radio frequency coils, etc. In particular, the asset 105 may comprise one or more components that constitute the asset 105, such as bearings, gears, coils, magnets and so forth.

It will be appreciated that the asset 105 may have a plurality of variants 105-1, 105-2, 105-3 ....105-N based on different parameters of the components such as variations in process environment during designing, manufacturing, assembling or testing of the asset, operation profile of the assets, load profile of the assets, stress profiles of the asset, material property distribution, operating temperature profile and so forth. In an example, each of the asset 105 may have a plurality of variants 105-1, 105-2, 105-3 ....105-N for the same model number of the asset. Such variabilities of the asset are captured during the lifecycle phases of the asset and subsequently updated in the blockchain 115 (same as blockchain in FIG. 1). In other words, each of the asset 105 with a unique serial number is a different variant of the asset 105-1, 105-2, 105-3 ....105-N and all the operations in production of the particular variant of the asset 105-1, 105-2, 105-3 ....105-N is tagged with a unique identifier for the particular variant of the asset 105-1, 105-2, 105-3 ....105-N.

As shown in FIG 2, 105 is the asset such as a motor. The asset may be produced to have variations 105-1, 105-2, 105-3 ....105-N as discussed above. Therefore, each variant of the asset is associated with the unique identifier. In one example, the unique identifier may be for example, a numeric string or an alphanumeric string that uniquely identifies the asset. The unique identifier may be assigned to the asset or the one or more components by an Original Equipment Manufacturer. In another example, the unique identifier may be assigned by another entity, for example, an end-user of the asset. In particular, each of the variants of the asset are assigned to a unique identifier. The unique identifier of the asset is used to identify the particular asset throughout the entire lifecycle phases of the asset.

The asset variants 105-1, 105-2, 105-3 ....105-N during the production phases, such as design, manufacturing, assembly, and testing are continuously monitored by respective one or more sensors 205. The one or more sensors 205 measure process parameters associated with the asset. For example, the one or more sensors 205 may include thermal imaging devices, vibration sensors, current and voltage sensors, etc. The sensors 205 obtain parameters associated with the asset and transmit it to the apparatus 210 for generating asset simulation data. The apparatus 210 is configured for generating digital twin for each of the variations in the asset in different lifecycle phases of the asset 105.

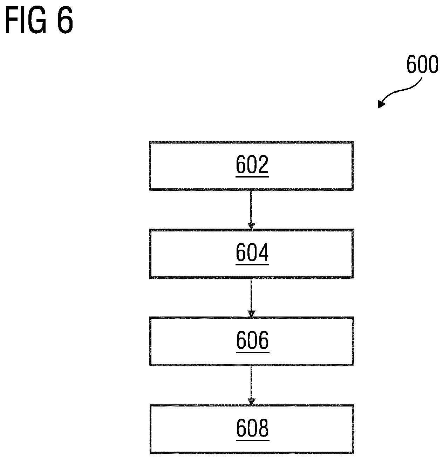

The apparatus 210 is configured for generating digital twins for each of the variants of the asset 105-1, 105-2, 105-3 ....105-N. In one implementation, the digital twin is a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. In one embodiment, generating the digital twin of the asset 105 comprises simulating the digital twin of the asset based on the parameter values and variations of the asset 105-1, 105-2, 105-3 ....105-N. The digital twin of the asset is updated to replicate, through simulations, a response substantially similar to a response of the asset in real-time. In other words, the digital twin is configured to represent a state of the asset in real-time. Advantageously, the digital twin acts as a soft-sensor that facilitates replicating responses of the one or more components of the asset, that are not measurable using physical sensing units. The digital twins thus generated for each of the variants of the asset generate asset simulation data. The asset simulation data thus generated is stored in the blockchain 115 tagged with the unique identifier for each variant of the asset 105-1, 105-2, 105-3 ....105-N. The method of generation of asset simulation data is explained in greater detail in FIG 6.

In one embodiment, the blockchain 115 is updated based on the response of the asset 105. More specifically, the response of the digital twin during the different processes in the lifecycle phases are recorded as a transaction. The transaction may comprise various fields, including but not limited to, a time-stamp associated with a particular process of the asset 105, the unique identifier associated with the asset 105 and the response of the asset 105 obtained during the process such as testing, designing, manufacturing or assembling of the asset. In one implementation, the transaction is a simple data structure consisting of details of origin such as the vendor details, timestamp and message payload. Furthermore, each transaction is attached with a hash function. The hash function may receive values for each of the fields and convert the values to data of fixed sizes. The data of fixed sizes may referred to as 'hashed values'. In addition, the hash function may also encrypt the fields before or after converting the values to the data of fixed sizes. Upon converting the data to fixed sizes, the transaction is created by combining the different fields in a predefined manner. For example, the hashed values of the time-stamp, the unique identifier associated with the asset 105 and the responses of the one or more components may be appended to create the transaction. Further, the transaction is appended with a header comprising metadata associated with the transaction and recorded on the blockchain 115. In a preferred embodiment, the metadata may comprise a location of the transaction on the blockchain 115 and the unique identifier associated with the component. The new transaction may be validated by validator nodes based on the consensus protocol before being recorded on the blockchain 115. If the validator nodes invalidate the transaction based on the consensus protocol, the new transaction is not recorded on the blockchain 115.

Referring to FIG 3, illustrated is an apparatus 120 of the system of FIG 1 for fault prediction and management of an asset, in accordance with an embodiment of the present disclosure. The apparatus comprises a processing unit 305 for performing the method steps as aforementioned. The processing unit 305, as used herein, may refer to any type of computational circuit, including, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 305 may also include embedded controllers, such as generic or programmable logic devices or arrays, application specific integrated circuits, single-chip computers, and the like. In general, a processing unit 305 may comprise hardware elements and software elements. The processing unit 305 can be configured for multithreading, i.e. the processing unit 305 may host different calculation processes at the same time, executing them either in parallel or switching between active and passive calculation processes.

The apparatus 120 comprises a memory 310. The memory 310 may comprise a volatile memory and a non-volatile memory. The memory 310 may be coupled for communication with the processing unit 305. The processing unit 305 may execute instructions and/or code stored in the memory 310. A variety of computer-readable storage media may be stored in and accessed from the memory 310. The memory 310 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory 310 comprises a pre-processing module 315, a critical component determination module 320, a retrieval module 325, an instantaneous digital twin simulation module 330, a failure prediction module 335, a root cause analysis module 340, a report generation module 345, a maintenance module 350 and a knowledge base updation module 355 henceforth collectively referred as an asset management module 360. The asset management module 360 is stored in the form of machine-readable instructions on any of the above-mentioned storage media and may be in communication to and executed by the one or more processing units 305. The following description explains functions of the modules when executed by the one or more processing units 305.

The preprocessing module 315 is configured for obtaining condition data associated with at one or more components of the asset 105 from the source. The critical component determination module 320 is configured for determining at least one critical component which is likely to affect a performance of the asset 105 based on the condition data.

The retrieval module 325 is configured for identifying unique identifier associated with the at least one critical component and obtaining parameter values associated with the at least one critical component from the blockchain 115.

The instantaneous digital twin simulation module 330 is configured for generating an instantaneous digital twin of the asset 105 based on the parameter values of the critical components obtained from the blockchain 115. The instantaneous digital twin corresponds to a particular variant of the asset 105. Further, the instantaneous digital twin simulation module 330 is configured for simulating a behavior of the one or more critical components based on the configured instantaneous digital twins in a simulation environment.

The fault prediction module 335 is configured for predicting a failure instance of the one or more critical components based on the behavior of the critical components in the simulation environment.

The root cause analysis module 340 is configured for diagnosing a cause of the failure instance of the one or more components based on the prediction of the failure instance. The diagnosis of the failure instance is performed using various techniques such as fault tree analysis (FTA) and fault mode and effect analysis (FMEA). These techniques along with the data stored in the pre-learned knowledge base are used to determine the root cause of the predicted fault in the asset 105.

The report generation module 345 is configured for generating reports associated with management of the asset 105. The generated reports may include, for example, the root cause of the predicted fault in the asset 105, anomalies in the asset 105, the estimated remaining useful life of the asset 105, one or more recommendations for maintenance of the asset 105 and a schedule for a maintenance activity to be performed on the asset 105.

The maintenance module 350 is configured for generating one or more recommendations for maintenance of the asset 105 based on the condition of the component determined using the root cause of the predicted failure. In addition, the maintenance module 350 is also configured for optimizing a downtime of the asset 105 by scheduling a maintenance activity for the asset 105 based on the condition of the component.

The knowledge base updation module 355 is configured for updating the pre-learned knowledge based on the determined actual root cause of the predicted failure.

The storage unit 365 may be a non-transitory storage medium which stores a pre-learned knowledge base 130. The pre-learned knowledge base 130 may store an event history of each of the variants of the asset 105 throughout the lifecycle phases. The apparatus 120 may further comprise an input unit 370 and an output unit 375. The input unit 370 may include input devices such as keypad, touch-sensitive display, camera (such as a camera receiving gesture-based inputs), etc., capable of receiving input signals such as requests for generating recommendations, manually entering new parameter values when required and the like. The output unit 375 may be a device with a graphical user interface displaying root cause failures of the asset, remaining useful life of the asset, one or more recommendations based on the condition of the asset 105, simulation results, and the like. The bus 380 acts as interconnect between the processing unit 305, the memory 310, the storage unit 365, the input unit 370, and the output unit 375.

Those of ordinary skilled in the art will appreciate that the hardware depicted in FIGS 1 and 2 may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

A system in accordance with an embodiment of the present invention includes an operating system employing a Graphical User Interface. The operating system permits multiple display windows to be presented in the Graphical User Interface simultaneously with each display window providing an interface to a different application or to a different instance of the same application. A cursor in the Graphical User Interface may be manipulated by a user through the pointing device. The position of the cursor may be changed and/or an event such as clicking a mouse button, generated to actuate a desired response.

One of various commercial operating systems, such as a version of Microsoft Windows^{™} may be employed if suitably modified. The operating system is modified or created in accordance with the present invention as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises elements distributed among one or more server systems that perform multiple functions according to various embodiments. These elements comprise, for example, executable, intermediate, or interpreted code, which communicate over a network using a communication protocol. The present invention is not limited to be executable on any particular system or group of systems, and is not limited to any particular distributed architecture, network, or communication protocol.

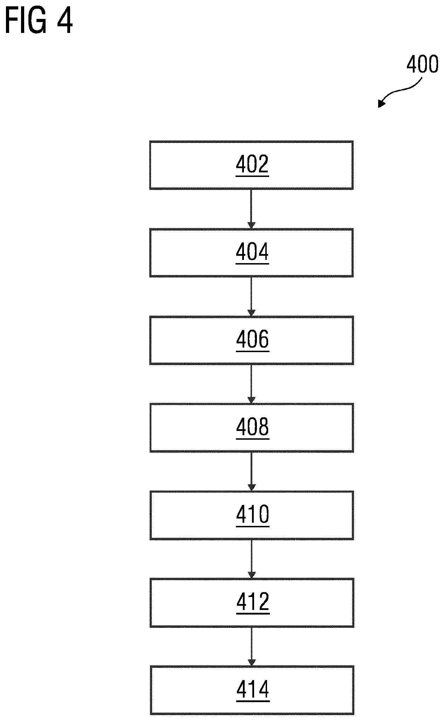

Referring to FIG 4, in conjunction with FIGS 1 and 2, a flowchart depicting steps of a method 400 for fault prediction and management of the asset 105 is described, in accordance with one embodiment of the present invention. The method 400 comprises steps 402 to 414 and may be implemented on the system 100.
At step 402, the condition data associated with one or more components of the asset 105 is received from the one or more sources. Herein, the condition data is indicative of one or more operating conditions of the asset 105 in real-time. The condition data is received from the one or more sources. The term 'sources' as used herein, refer to electronic devices configured to obtain and transmit the operational data to the processing unit. Non-limiting examples of sources include sensing units, controllers and edge devices. The sensing units measure operating parameters associated with the asset 105. For example, the sensing units may include thermal imaging devices, vibration sensors, current and voltage sensors, etc. The condition data includes values of vibration, temperature, current, magnetic flux, velocity, power of a rotor in a turbine.

At step 404, one or more critical components which are likely to affect a performance of the asset 105 are determined based on the condition data. The term 'performance' as used herein refers to metrics that affect am efficiency of the asset 105. In the present disclosure, the performance may be measured in terms, for example, cycle time, stability or accuracy of the asset. The term 'critical components' refers to one or more components of the asset that have a higher probability of failure than others. In an example, the critical components may be determined based on a history of failures, repair complexity of the component, impact on performance of other components and/or the asset in case of failure, cost of repair in case of failure and so forth. In other example, the critical components may be determined based on results of simulation models. In an example, a generic simulation model is generated to simulate the operations of the asset to determine the critical components. The generic simulation model may be a simulation model for estimating remaining useful life (RUL) of the asset. The critical components may be determined based on the RUL life models. The one or more critical components are selected such that behavior of these components affect a performance of the asset 105. In an embodiment, the one or more critical components may include the rotor, the windings, bearings, couplers, motors, and so forth.

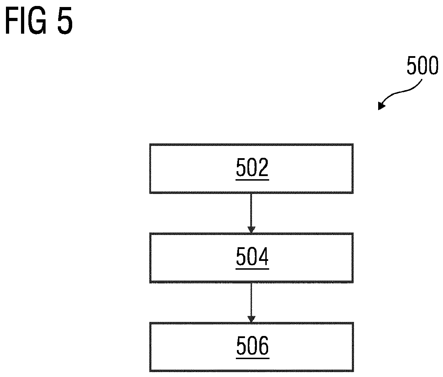

At step 406, parameter values associated with the one or more critical components are obtained from a distributed database, such as the blockchain 115. Herein, the blockchain 115 stores asset simulation data associated with lifecycle phases of the asset 105. The distributed database 115 may be a decentralized, distributed digital ledger that is used to record transactions across a plurality of nodes connected over a network, such that the recorded transactions are immutable and may be viewed by any of the nodes. In a preferred embodiment, the distributed database 115 is implemented as a permissioned blockchain, where one or more nodes in the distributed database may be given express authority for validating transactions in the permissioned blockchain. In another embodiment, the distributed database 115 may be implemented as a public blockchain or a combination of a public blockchain and a permissioned blockchain. The parameter values for each of the lifecycle phases are obtained from the digital twin models as described in detail in FIG. 2. Non-limiting examples of parameter values include design tolerance, material information, operating temperature values for various processes, clearance value, fitness value, tolerance distribution, material property distribution, heat treatment process distribution, surface finish distribution, testing deviations and distributions, cycle time, test values, and so forth. Advantageously, the parameter values are obtained from the different lifecycle phases of the asset generated from different vendors that are securely updated in the blockchain. The method of obtaining parameter values from the blockchain is described in detail in FIG. 5.

At step 408, an instantaneous digital twin of the asset 105 is configured based on the parameter values of the critical components obtained from the distributed database 115. The instantaneous digital twin corresponds to a particular variant of the asset 105. The instantaneous digital twin of the asset is the specific digital twin of the asset which is generated for a particular asset considering different variabilities of the asset 105. In an example, the instantaneous digital twin is configured to simulate remaining useful life of the asset based on the parameter values obtained from the blockchain 115. The term 'remaining useful life' as used herein, refers to a duration between initiation of a detectable failure mode and a functional failure of the asset. It will be appreciated that for one asset 105, there may be several instantaneous digital twins based on the variabilities of the asset.

At step 410, a behavior of the one or more critical components is simulated based on the configured instantaneous digital twins in a simulation environment. In accordance with an embodiment of the present invention, simulating the behavior of the one or more critical components comprises generating a simulation instance based on the configured instantaneous digital twin. The simulation instance may be a thread of simulation, associated with the simulation model, independent of all other threads during execution. Further, the simulation instance is executed in the simulation environment using a simulation model for generating simulation results indicative of a behavior of the one or more critical components. The simulation model may be an analytical model in machine-executable form derived from at least one of a physics-based model, a data-driven model or a hybrid model associated with the machine tool. The simulation model may be a 1-dimensional(1D) model, a 2-dimensional(2D) model, a 3-dimensional(3D) model or a combination thereof. The simulation instance may be executed in the simulation environment as one of stochastic simulations, deterministic simulations, dynamic simulations, continuous simulations, discrete simulations, local simulations, distributed simulations, co-simulations or a combination thereof. It must be understood that the simulation models referred to in the present disclosure may include both system-level models and component-level models associated with the asset. In an embodiment, the behavior of the one or more critical components is associated with a stability of the asset 105. In another embodiment, the behavior of the one or more critical components is associated with one or more defects in the one or more critical components. The defects in a component are a result of one or more failure modes. The defects include, but are not limited to, wearing in components, plastic deformation, thermal cracking, chipping and fatigue fracture.

At step 412, a failure instance of the one or more critical components is predicted based on the behavior of the critical components in the simulation environment. In one embodiment, predicting the failure instance of the asset 105 comprises determining a remaining useful life associated with the asset based on the configured instantaneous digital twin. In another embodiment, predicting the failure instance comprises predicting an impact on accuracy of operations associated with the asset based on the parameter values obtained from the blockchain 115. The accuracy of asset 105 indicates a difference between an actual operation efficiency specified by the operator and a measurement of operation efficiency of the configured instantaneous digital twin of the asset. In yet another embodiment, predicting the failure instance comprises computing a remaining useful life of the one or more critical components based on the one or more defects in the one or more components attained during different lifecycle phases of the asset. Advantageously, prediction of the failure instance based on the simulation from the configured instantaneous digital twin ensures that the risk of taking average parameters for the asset is eliminated, thereby increasing the accuracy of fault prediction and subsequent analysis of the root cause of the failure.

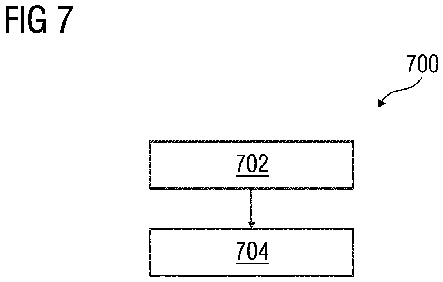

At step 414, a cause of the failure instance of the one or more components is diagnosed based on the prediction of the failure instance. In an embodiment, the method of diagnosing the cause of the failure instance of the one or more components comprises simulating the predicted failure instance in a simulation environment. The simulation environment may comprise one or more simulation models, mathematical models, diagnosis models that simulate the parameter values obtained from the blockchain to determine the cause of the failure instance. The simulation model may be a 1-dimensional(1D) model, a 2-dimensional(2D) model, a 3-dimensional(3D) model or a combination thereof. The simulation instance may be executed in the simulation environment as one of stochastic simulations, deterministic simulations, dynamic simulations, continuous simulations, discrete simulations, local simulations, distributed simulations, co-simulations or a combination thereof. In an example, the simulation models may include high fatigue models, low fatigue models, wear and tear models, and the like. In a preferred embodiment, the simulation models simulate a behaviour of the predicted failure based on the determined parameter values. The method comprises determining the cause of the failure instance based on the simulation. In an embodiment, the cause of the predicted failure instance is diagnosed using root cause analysis models such as fault tree analysis (FTA) and fault mode and effect analysis (FMEA). In another embodiment, the predicted failure is diagnosed based on the knowledge stored in the pre-learned knowledge base 130. The pre-learned knowledge base 130 comprises a plurality of pre-linked data objects indicative of parameters and corresponding responses pertaining to the one or more components of the asset, history of failures of the asset, historical data pertaining to parameter values of the one or more components of the asset, failure predictions and corresponding cause of failures and so forth. It should be noted that each of pre-linked data object is connected using one or more paths. The pre-learned knowledge base 130 includes asset specific information, data pertaining to conceptualization of the asset, data pertaining to designing of the asset, data pertaining to manufacturing of the asset, data pertaining to assembling of the asset, data pertaining to manufacturing of the asset, process specific information, general process information, and so forth that may be linked to each other in a defined order. Additionally, the pre-learned knowledge base 130 comprises failures and causes of the failures in a linked manner. In an example, a failure in the motor may be linked to reduced lubrication in the rotor, rotor failure may be linked to defects in the bearing and so forth. Additionally, the pre-learned knowledge base also includes standard procedure data that may be specific to a process in the asset 105. The standard procedure data includes a set of pre-defined rules, a standard operating procedure, a pre-defined activity or a process, and the like. Furthermore, the pre-learned knowledge base 130 also comprises physics-based models for specific processes in the designing, manufacturing, assembling, testing and operation of the asset. Additionally, the pre-learned knowledge base 130 also includes standard parameter values associated with one or more components in the asset 105. Furthermore, the pre-learned knowledge base 130 also comprises data pertaining to previously detected anomalies or failures and the actions that were initiated to resolve the previously predicted failures. It will be appreciated that the pre-learned knowledge base 130 may be comprised of a knowledge graph including a plurality of nodes that are linked to one another based on physics-based models and semantic information. The knowledge graph may be structured in a hierarchical manner such that the failures in the asset are connected to specific components, and the components are further connected to the asset, previously predicted failures, historical parameters and so forth. It will also be appreciated that the pre-learned knowledge base 130 is a dynamic information set that is constantly updated to add new data objects and links or paths between data objects as and when any new information pertaining to the assets, failure predictions, causes of failures or general process information is available. The diagnosis of the cause of the failure instance is explained in greater detail in FIG 7.

Referring to FIG 5, illustrated is a flowchart depicting steps of a method 500 for obtaining parameter values associated with the one or more critical components from the distributed database, in accordance with an embodiment of the present invention. At step 502, a unique identifier associated with the one or more critical components of the predicted failure instance is identified based on the distributed database. As aforementioned, parameter values pertaining to a particular asset are tagged with the unique identifier of the asset and are subsequently stored on the blockchain. Henceforth, for obtaining the parameter values, the unique identifier of the asset is identified. Each of the components in the asset are also tagged with the same unique identifier. At step 504, the lifecycle phases of the one or more critical components are traced based on the identified unique identifier. In an embodiment, tracing the lifecycle phases of the critical components comprises identifying a transaction corresponding to the critical component from the blockchain based on the identified unique identifier associated with the component. In one implementation, the one or more transactions are identified by traversing headers associated with each of the transactions recorded on the blockchain. Further, the metadata in each of the headers is checked to determine whether the transaction is associated with the component based on the unique identifier present in the metadata. In another implementation, the unique identifier associated with the asset may be used to determine a location of the transaction comprising the parameter values associated with the component. For example, the unique identifier may be mapped to the location of the transaction using a lookup table. The lookup table may map unique identifiers associated with one or more components in the asset to locations of respective transactions corresponding to the one or more components. At step 506, the parameter values are determined from the blockchain pertaining to the one or more critical components based on the tracing. Further, the parameter values associated with the component is obtained from the identified transaction.

Referring to FIG 6, illustrated is a flowchart depicting steps of a method 600 for generating asset simulation data, in accordance with an embodiment of the present invention. At step 602, a first digital twin associated with a first phase of the product lifecycle is generated. In an embodiment, the first phase may correspond to a phase of the asset production such as design phase, manufacturing phase, assembly phase, testing phase and so on. The first digital twin comprises a plurality of simulation models pertaining to each variant of the one or more components in the first phase. In an example, the asset is a motor, then the first digital twin may correspond to the design phase. Herein, the first digital twin may comprise a plurality of simulation models of the one or more components of the asset. In an example, the first digital twin may further comprise simulation models of rotor, bearings, coils, magnets and so forth. At step 604, a second digital twin associated with a second phase of the product lifecycle is generated. In an embodiment, the second phase may correspond to a phase of the asset production such as design phase, manufacturing phase, assembly phase, testing phase and so on. The second digital twin comprises a plurality of simulation models pertaining to each variant of the one or more components in the first phase. In an example, the asset is a motor, then the first digital twin may correspond to the design phase. Herein, the first digital twin may comprise a plurality of simulation models of the one or more components of the asset. In an example, the second digital twin may further comprise simulation models of rotor, bearings, coils, magnets and so forth. It will be appreciated that the terms 'first digital twin' and 'second digital twin' should not be construed limiting in nature, and may refer to any two digital twins generated in any of the lifecycle phases respectively. Similarly, the terms 'first phase' and the 'second phase' should not be construed limiting in nature and may refer to any of the lifecycle phases of the asset. At step 606, the first digital twin and second digital twin are simulated based on inputs from one or more sensors in the first phase and the second phase respectively. In an embodiment, the one or more sensors are configured to obtain data from each of the operations in the first phase and the second phase. In an example, the data is obtained for operations in the design phase. Herein, the data from the design phase may be tolerance data, data from CAD models, heat treatment data, data pertaining to surface finish and so forth. In another example, the data is obtained for the operations in the manufacturing phase. Herein, the data obtained from the manufacturing phase may be tolerance distribution, material property distribution, heat treatment process distribution, surface finish distribution and so forth. It will be appreciated that data is parallelly obtained from the one or more sensors in each of the lifecycle phases. The data thus obtained from the sensors is simulated using the first digital twin and the second digital twin. At step 608, the asset simulation data is generated based on the simulation. The results of the simulation of each of the digital twins is the asset simulation data. In an embodiment, data pertaining to each of the variant of the asset is associated with a unique identifier throughout the first phase and the second phase.

Referring to FIG 7, illustrated is a flowchart depicting steps of a method 700 for diagnosing the cause of the failure instance of each of the one or more components, in accordance with an embodiment of the present invention. At step 702, the parameter values obtained from the distributed database are compared with historical data stored in the pre-learned knowledge base 130. Herein, the historical data comprises response trends of the component and associated cause for the response trends. In one example, the comparison between the parameter values obtained from the blockchain and the historical data is based on the fault tree analysis (FTA) technique. In an example, the pre-learned knowledge base 130 comprises a plurality of pre-linked data objects indicative of parameters and corresponding responses pertaining to the one or more components of the asset, history of failures of the asset, historical data pertaining to parameter values of the one or more components of the asset, failure predictions and corresponding cause of failures and so forth. At step 704, the cause of the failure instance of each of the one or more components is determined from the historical data based on the comparison. In an example, the historic data may be analysed using one or more of descriptive techniques, exploratory techniques, inferential techniques, predictive techniques, causal techniques, qualitative analysis techniques, quantitative analysis techniques and so on. Based on the comparison, the root cause of the predicted failure instance may be determined.

In an embodiment, the method may further comprise comparing the determined cause of failure with an actual cause of failure upon failure of the asset. In an example, the actual cause of the failure of the asset may be different from the determined cause of the failure. In such a case, the pre-learned knowledge base is updated to link the updated root cause of the failure for future reference. Advantageously, the pre-learned knowledge base 130 is constantly updated to include accurate root causes of the failures based on feedback in real-time.

In an embodiment, the method further comprises determining a condition of the asset 105 based on the determined cause of the failure of the critical components. The condition of the asset may be determined by simulating a degradation model such a remaining useful life (RUL) model. The RUL model determines a remaining operating life of the asset based on the performance of the critical components of the asset. In an embodiment, simulation assisted Failure Mode and Effects Analysis (FMEA) may be performed in order to determine the remaining useful of the one or more critical components based on the instantaneous digital twins. Based on the RUL, a failure time of the asset is determined. For example, the failure time is equal to the shortest value of RUL among the RULs of the one or more critical components. Further, the method comprises generating one or more recommendations for maintenance of the asset based on the condition of the component. The one or more recommendation may be generated for improving operational life of the asset and mitigating failure instance of the asset. In one embodiment, the recommendations may be generated based on information stored in the pre-learned knowledge base 130. For example, if the root cause of the failure of the motor is defects of the bearings, then recommendation may be associated with properly manufacturing the bearing.

The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deduced by those skilled in the art without leaving the scope of protection of the claimed invention.

## Claims

1. A method for fault prediction and management of an asset (105) in a technical installation, the method comprising:
receiving, by a processing unit (305), condition data associated with one or more components of the asset (105) from one or more sources, wherein the condition data is indicative of one or more operating conditions of the asset in real-time;
determining one or more critical components which are likely to affect a performance of the asset (105) based on the condition data;
obtaining parameter values associated with the one or more critical components from a distributed database (115), wherein the distributed database stores asset simulation data associated with lifecycle phases of the asset (105);
configuring an instantaneous digital twin of the asset based (105) on the parameter values of the critical components obtained from the distributed database (115), wherein the instantaneous digital twin corresponds to a particular variant of the asset;
simulating a behavior of the one or more critical components based on the configured instantaneous digital twins in a simulation environment;
predicting a failure instance of the one or more critical components based on the behavior of the critical components in the simulation environment; and
diagnosing a cause of the failure instance of the one or more components based on the prediction of the failure instance.

2. The method according to claim 1, wherein obtaining parameter values associated with the one or more critical components from a distributed database (115) comprises:
identifying a unique identifier associated with the one or more critical components of the predicted failure instance based on the distributed database (115);
tracing the lifecycle phases of the one or more critical components based on the identified unique identifier; and
determining the parameter values from the distributed database pertaining to the one or more critical components based on the tracing.

3. The method according to claim 1, wherein tracing the lifecycle phases of the critical components comprises:
identifying, by the processing unit (305), one or more transactions corresponding to the critical component from the distributed database (115) based on the identified unique identifier associated with the component; and
obtaining the parameter values associated with the component from the identified transactions.

4. The method according to any of the preceding claims, wherein obtaining parameter values associated with the one or more critical components from the distributed database (115) further comprises generating asset simulation data for each of the lifecycle phases of the asset (105).

5. The method according to claim 5, wherein generating the asset simulation data comprises
generating a first digital twin associated with a first phase of the product lifecycle, wherein the first digital twin comprises a plurality of simulation models pertaining to each variant of the asset in the first phase;
generating a second digital twin associated with a second phase of the product lifecycle, wherein the second digital twin comprises a plurality of simulation models pertaining to each variant of asset in the second phase;
simulating the first digital twin and second digital twin based on inputs from one or more sensors in the first phase and the second phase respectively; and
generating asset simulation data based on the simulation.

6. The method according to claim 5, further comprising associating data pertaining to each of the variant of the asset (105) with a unique identifier throughout the first phase and the second phase.

7. The method according to any of the preceding claims, wherein diagnosing the cause of the failure instance of each of the one or more components comprises:
simulating the predicted failure instance in a simulation environment; and
determining the cause of the failure instance based on the simulation.

8. The method according to any of the preceding claims, wherein diagnosing the cause of the failure instance of each of the one or more components comprises:
comparing the parameter values obtained from the distributed database (115) with historical data stored in a pre-learned knowledge base (130), wherein the historical data comprises response trends of the component and associated cause for the response trends; and
determining the cause of the failure instance of each of the one or more components from the historical data based on the comparison.

9. The method according to any of the preceding claims, further comprising:
comparing the determined cause of failure with an actual cause of failure upon failure of the asset (105);
updating the pre-learned knowledge base (130) based on the comparison.

10. The method according to any of the preceding claims, further comprising determining a condition of the asset (105) based on the identified cause of the failure of the critical components.

11. The method according to claim 10 further comprising generating, by the processing unit, one or more recommendations for maintenance of the asset (105) based on the condition of the asset (105).

12. The method according to any of the preceding claims further comprising outputting, by the processing unit (305), the identified cause of the failure of the asset (105) and the recommendations for maintenance of the asset on a Graphical User Interface associated with an output device (125).

13. An apparatus (120) for fault prediction and management of an asset in technical installation, the apparatus comprising:
one or more processing units (305); and
a memory unit (310) communicatively coupled to the one or more processing units (305), wherein the memory unit (310) comprises an asset management module (360) stored in the form of machine-readable instructions executable by the one or more processing units, wherein the asset management module (360) is configured to perform one or more method steps according to the claims 1 to 12.

14. A system (100) for fault prediction and management of an asset in a technical installation comprising:
one or more sources capable of providing condition data associated with condition of one or more electromechanical systems; and
a distributed database (130) comprising asset simulation data associated with lifecycle phases of the asset; and
a server communicatively coupled to the one or more sources, wherein the server including an asset management module (360) is configured to perform one or more method steps according to the claims 1 to 12.

15. A computer-program product having machine-readable instructions stored therein, which when executed by one or more processing units (305), cause the processing units (305) to perform a method according to any of the claims 1 to 12.
